# EUROPEAN PATENT SPECIFICATION

(11) **EP 2 091 100 B1**
(45) Date of publication and mention of the grant of the patent: **04.01.2012**
(21) Application number: 07831868.0
(22) Date of filing: 08.11.2007
(51) Int. Cl.: H01M 8/02

(54) **METHOD FOR PRODUCING SEPARATOR MATERIAL FOR SOLID POLYMER FUEL CELL**
VERFAHREN ZUR HERSTELLUNG EINES TRENNMATERIALS FÜR EINE FESTSTOFF-POLYMER-BRENNSTOFFZELLE
PROCÉDÉ DE FABRICATION D'UN MATÉRIAU SÉPARATEUR POUR UNE PILE À COMBUSTIBLE À POLYMÈRE SOLIDE

(30) Priority: 16.11.2006 JP 2006309794
(43) Date of publication of application: 19.08.2009
(73) Proprietor: Tokai Carbon Company, Ltd., Minato-ku, Tokyo 107-8636 (JP)
(72) Inventor: HIRANO, Nobuyuki, Tokyo 107-8636 (JP)
(74) Representative: Flaccus, Rolf-Dieter
(86) International application number: PCT/JP2007/072138
(87) International publication number: WO 2008/059903

(56) References cited:
- WO-A1-2007/125640
- JP-A- 08 222 241
- JP-A- 2003 051 317
- JP-A- 2004 193 044
- JP-A- 2005 339 953
- JP-A- 2006 172 776

## Description

### TECHNICAL FIELD

The present invention relates to a method of producing a polymer electrolyte fuel cell separator material.

### BACKGROUND ART

A fuel cell directly converts the chemical energy of fuel into electrical energy at a high conversion efficiency. For example, a polymer electrolyte fuel cell can produce high power at a relatively low temperature, and is expected to be a small portable power supply such as an automotive power supply.

The polymer electrolyte fuel cell includes a stack formed by stacking single cells, two charge collectors provided outside the stack, and the like, each of the single cells including an electrolyte membrane formed of a polymer ion-exchange membrane such as a fluororesin ion-exchange membrane having a sulfonic acid group, catalytic electrodes supporting a catalyst such as platinum and provided on either side of the electrolyte membrane, separators provided with gas supply grooves for supplying a fuel gas (e.g., hydrogen) or an oxidant gas (e.g., oxygen or air) to the electrodes, and the like.

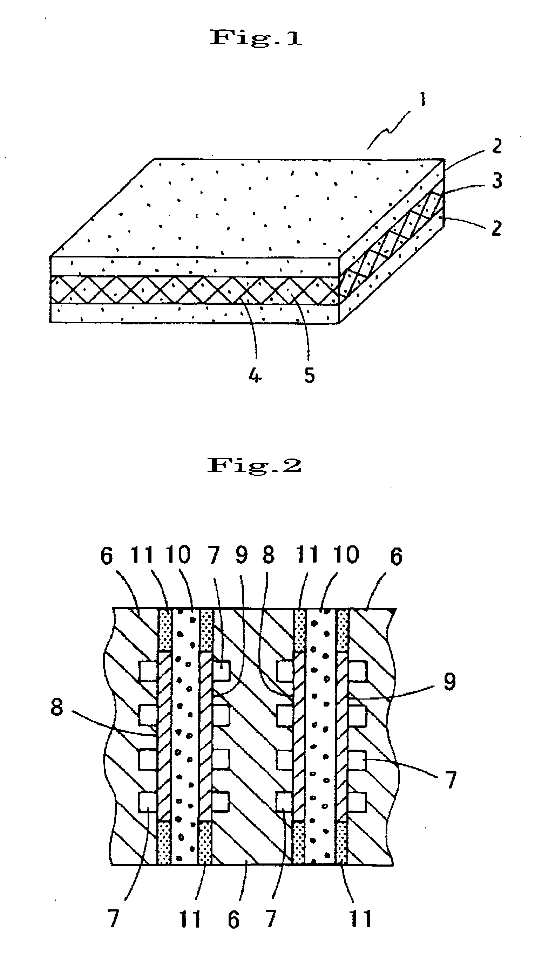

As shown in FIG. 2, the single cell includes a pair of electrodes 8 and 9 (cathode 8 and anode 9) that are disposed on either side of an electrolyte membrane 10 formed of a fluororesin ion-exchange membrane, separators 6 that are formed of a dense carbon material and disposed with the electrodes 8 and 9 interposed therebetween, and sealing materials 11 that are formed of rubber or the like and provided on the ends of the separators in parallel with gas grooves. The electrodes 8 and 9 are formed of a porous body made of carbon short fibers that support a catalyst (e.g., platinum), a product obtained by binding carbon black that supports a catalyst using a resin, or the like.

A plurality of grooves 7 are formed in the separator 6. The space (groove 7) formed between the separator 6 and the cathode 8 is used as a passage for an oxidant gas (oxygen or oxygen-containing gas such as air), and the space (groove 7) formed between the separator 6 and the anode 9 is used as a passage for a fuel gas (e.g., hydrogen gas or a mixed gas containing hydrogen as the main component). A current is caused to flow between the electrodes by utilizing chemical reactions that occur when the fuel gas and the oxidant gas come in contact with the electrodes. A cell stack is generally assembled by stacking several tens to several hundreds of single cells.

The power generation mechanism of the fuel cell is as follows. Specifically, the following reactions occur when a fuel gas (e.g., hydrogen gas) supplied to the anode of the cell and an oxidant gas (e.g., oxygen gas) supplied to the cathode come into contact with the electrodes, and electrons (e⁻) produced due to the reactions are removed to the outside as electrical energy.
Abode: H₂→2H⁺+2e⁻
Cathode: (1/2)O₂+2H⁺+2e⁻→H₂O
Total reaction: H₂+(1/2)O₂→H₂O

Therefore, since it is necessary to completely separately supply the fuel gas and the oxidant gas to the electrodes, the separator must exhibit excellent gas impermeability. Moreover, since it is effective to reduce the internal resistance of the cell in order to increase the power generation efficiency, the separator must have a reduced thickness and exhibit high conductivity.

In order to improve the cell performance, it is important to prevent an increase in contact electrical resistivity between the separator and the electrode and prevent a leakage of gas between or from the single cells by assembling the stack so that the single cells closely adhere and maintain an excellent contact state during power generation. Specifically, the separator material must exhibit a high strength so that breakage or deficiency does not occur during assembly, and must exhibit a sufficient strength at the cell operating temperature (about 80 to 120°C), for example.

A carbon material is suitable as the separator material for which the above-mentioned properties are desired. However a graphite material has poor workability, low air-tightness, and insufficient gas impermeability. A glass-like carbon material has a dense texture and exhibit excellent gas impermeability, but has poor machinability due to high hardness and fragility.

Therefore, a separator material formed of a carbon and cured resin molded product that is produced by binding a carbon powder (e.g., graphite) using a thermosetting resin (binder), and molding the resulting product has been suitably used. Various inventions relating to such a carbon and cured resin molded product have been proposed.

For example, JP-A-2000-021421 discloses a polymer electrolyte fuel cell separator member and a method of producing the same, wherein the separator member is formed of a graphite and cured resin molded product which is a plate-shaped molded product containing 60 to 85 wt% of a graphite powder having a particle size distribution with an average particle diameter of 50 µm or less and a maximum particle diameter of 100 µm or less, and 15 to 45 wt% of a thermosetting resin, and has a resistivity in the plane direction of 300×10⁻⁴ Ω·cm or less, a ratio of the resistivity in the thickness direction to the resistivity in the plane direction of 7 or less, and a flexural strength of 300 kgf/cm² or more.

JP-A-2000-243409 discloses a polymer electrolyte fuel cell separator member and a method of producing the same, wherein the separator member is formed of a carbon and cured resin molded product containing 40 to 90 wt% of a carbon powder and 10 to 60 wt% of a thermosetting resin and having a flexural strength at room temperature of 30 MPa or more and a flexural strength decrease rate from room temperature to 100°C of 30% or less.

JP-A-2006-172776 discloses a fuel cell separator material and a method of producing the same, wherein a mixture prepared by mixing a carbonaceous powder and a resin binder in a weight ratio of 90:10 to 65:35 is applied to each side of an organic sheet having a through-hole open area ratio (R) of 25 to 85%, and the through-holes in the organic sheet are filled with the mixture of the carbonaceous powder and the resin binder.

JP-A-2004-193044 teaches a method for manufacturing a separator for a fuel cell which can be mass-produced in a short time, wherein Graphite powder is added and mixed with a thermoplastic resin, a solvent, and a plasticizer, which is made into slurry, using a stirrer. The slurry is coated on a film, which is then dried, molded under pressure, and mold-pressed to form a groove, providing a separator for a fuel cell. By pressing through rolling, a separator of a required thickness is easily manufactured.

### DISCLOSURE OF THE INVENTION

On the other hand, a reduction in size of fuel cells has been strongly desired. For example, a reduction in size, weight, and thickness of a cell stack has been desired for automotive fuel cells. Moreover, a strength that ensures that cracks do not occur due to vibration or the like is also desired.

However, since the separator material disclosed in JP-A-2006-172776 is produced by applying the mixture of the carbonaceous powder and the resin binder or a sheet of the mixture to each side of the organic sheet, a reduction in thickness while uniformly applying the mixture is limited. Moreover, the production efficiency deteriorates.

The inventor of the present invention conducted extensive studies in order to solve the above-described problems. As a result, the inventor found that a separator material that has a uniform and reduced thickness, allows a flexible elastomer to be used as a binder for a carbonaceous powder instead of a thermosetting resin, and shows a large amount of strain at break can be efficiently produced by utilizing a green sheet prepared by causing a slurry in which a carbonaceous powder is dispersed to adhere to each side of an organic sheet.

The present invention was conceived based on the above-mentioned finding. An object of the present invention is to provide a method that can efficiently produce a polymer electrolyte fuel cell separator material that has a uniform and reduced thickness.

A method of producing a polymer electrolyte fuel cell separator material according to the present invention that achieves the above object comprises:
a first step that disperses 100 parts by weight of a carbonaceous powder in a resin solution to prepare a slurry having a viscosity of 100 to 1500 mPa·s, the resin solution being prepared by dissolving 10 to 35 parts by weight of a resin binder and 0.1 to 10 parts by weight of a dispersant in an organic solvent;
a second step that immerses an organic sheet having a through-hole open area ratio (R) of 25 to 85% in the slurry so that the slurry adheres to each side of the organic sheet and dries the slurry so that each side of the organic sheet is coated with the slurry to obtain a green sheet; and
a third step that cuts the green sheet into a specific shape, and thermocompression-forms one or more green sheets.

According to the present invention, a polymer electrolyte fuel cell separator material that has a uniform and reduced thickness and exhibits excellent material properties (e.g., strength and electrical properties) can be efficiently produced.

### BRIEF DESCRIPTION OF THE DRAWINGS

FIG. 1 is a perspective view schematically showing the structure of a polymer electrolyte fuel cell separator material produced according to the present invention.
FIG. 2 is a partial cross-sectional view showing a schematic structure of a polymer electrolyte fuel cell.

### BEST MODE FOR CARRYING OUT THE INVENTION

Each step of the method of producing a polymer electrolyte fuel cell separator material according to the present invention is described below.

### First step

The first step disperses 100 parts by weight of a carbonaceous powder in a resin solution to prepare a slurry having a viscosity of 100 to 1500 mPa·s, the resin solution being prepared by dissolving 10 to 35 parts by weight of a resin binder and 0.1 to 10 parts by weight of a dispersant in an organic solvent.

The resin binder is not particularly limited insofar as the resin binder has resistance to acids such as an electrolyte (e.g., sulfonic acid) and heat resistance that withstands the fuel cell operating temperature. A thermosetting resin, a thermoplastic resin, or the like may be used as the resin binder.

Examples of the thermosetting resin include a phenol resin such as a resol type phenol resin and a novolac type phenol resin, a furan resin such as a furfuryl alcohol resin, a furfuryl alcohol furfural resin, and a furfuryl alcohol phenol resin, a polyimide resin, a polycarbodiimide resin, a polyacrylonitrile resin, a pyrenephenanthrene resin, an epoxy resin, a urea resin, a diallyl phthalate resin, an unsaturated polyester resin, a melamine resin, and the like. These thermosetting resins may be used either individually or in combination.

Examples of the thermoplastic resin include a styrene resin such as an acrylonitrile-butadiene-styrene (ABS) resin, an acrylonitrile-styrene copolymer (AS), a high-impact polystyrene (HIPS), polystyrene (PS), a methyl methacrylate styrene-butadiene rubber copolymer (MBS), a methyl methacrylate-styrene copolymer (MS), an acrylonitrile-ethylene-propylene rubber-styrene copolymer (AES), and an acrylonitrile-styrene acrylate copolymer (AAS), a polyolefin resin such as polyethylene (PE), polypropylene (PP), polybutene-1, an ethylene-vinyl acetate copolymer (EVA), and an ethylene-vinyl alcohol copolymer (EVOH), a polyamide resin, a thermoplastic polyester resin, a polycarbonate (PC) resin, a wholly aromatic polyester resin, polyphenylene sulfide (PPS), a vinyl chloride resin (PVC), a polysulphone resin, a polyether ether ketone resin, a (modified) polyphenylene ether resin, polyoxymethylene (POM), polymethyl methacrylate (acryl) (PMMA), a fluororesin, a polyketone (PK), a norbornene, polyamideimide (PAI), polyphthalamide (PPA), and the like. These thermoplastic resins may be used either individually or in combination.

An elastomer may also be used as the resin binder. Examples of the elastomer include an isoprene elastomer, a butadiene elastomer, a diene elastomer, an olefin elastomer, an ether elastomer, a polysulfide elastomer, a urethane elastomer, a fluorine-containing elastomer, a silicone elastomer, a blend of two or more of these elastomers, a thermoplastic elastomer, a flexible thermosetting resin (e.g., epoxy resin), a blend of the above elastomer and the above thermosetting resin or thermoplastic resin, a thermosetting resin-modified elastomer, and the like.

The dispersant is added to the resin solution in order to stabilize the dispersion state of the slurry. For example, a surfactant is suitably used as the dispersant. Examples of the surfactant include a non-ionic surfactant such as an aromatic ether surfactant, a carboxylate surfactant, an acrylate surfactant, a surfactant phosphate, a sulphonate surfactant, a fatty acid ester surfactant, a urethane surfactant, a fluorine-containing surfactant, an aminoamide surfactant, and an acrylamide surfactant, a cationic surfactant such as an ammonium surfactant, a sulfonium surfactant, and a phosphonium-containing surfactant, and an anionic surfactant such as a carboxylic acid surfactant, a phosphoric acid surfactant, a sulfonic acid surfactant, a hydroxyfatty acid surfactant, and a fatty acid amide surfactant. These surfactants may be used either individually or in combination.

The dispersant preferably has a polystyrene-reduced weight average molecular weight determined by gel permeation chromatography of 2000 to 100,000. If the molecular weight is less than 2000, the polymer component of the dispersant that adheres to the carbonaceous powder may not sufficiently serve as a steric repulsion layer so that the carbonaceous powder may re-aggregate. If the molecular weight is more than 100,000, it may be difficult to produce the dispersant with high reproducibility. In this case, the dispersant may act as an aggregating agent.

In order to prevent the slurry adhering to the organic sheet from dripping, it is effective to add an anti-sagging agent in such an amount that the properties of the separator material are not affected. This ensures production of a green sheet having a uniform thickness. As the and-sagging agent, a product that contains a higher fatty acid ester, an amide wax (e.g., higher fatty acid amide), an amide wax dissolved paste, or an amide wax swellable paste as the main component, and a solvent such as a mineral spirit, xylene, isoparaffin, isobutanol, N-methylpyrrolidone, benzyl alcohol, methanol, or ethanol as the main solvent may be used.

A green sheet having a smooth surface can be obtained by adding an additive such as a wet-permeation agent, a preservative, an anti-foaming agent, a wetting agent, or a color separation preventing agent to improve the stability of the slurry.

The organic solvent is not particularly limited insofar as the organic solvent is normally available and dissolves the resin. Examples of the organic solvent include alcohols such as methanol, ethanol, and isopropyl alcohol. It is preferable to use methyl ethyl ketone taking account of the viscosity, stability, drying speed, and the like of the slurry.

10 to 35 parts by weight of the resin binder and 0.1 to 10 parts by weight of the dispersant are mixed into the organic solvent. The mixture is then stirred to prepare a resin solution. If the amount of the resin binder is less than 10 parts by weight, the strength of the carbon and cured resin molded product may decrease. If the amount of the resin binder is more than 35 parts by weight, an increase in electrical resistivity may occur. If the amount of the dispersant is less than 0.1 parts by weight, it may be difficult to stably disperse the carbonaceous powder in the resin solution. If the amount of the dispersant is more than 10 parts by weight, the properties of the resin may deteriorate. As a result, the mechanical properties of the separator material may deteriorate. Moreover, the chemical resistance (particularly in sulfuric acid solution) may deteriorate. The amount of the organic solvent is appropriately set taking account of the viscosity of the slurry.

100 parts by weight of the carbonaceous powder is added to the resin solution. The carbonaceous powder is dispersed in the resin solution using a universal stirrer, an ultrasonic stirrer, a cutter mixer, a triple roll, or the like to prepare a slurry having a viscosity of 100 to 1500 mPa·s.

A graphite powder is suitable as the carbonaceous powder. For example, artificial graphite, natural graphite, expanded graphite, or a mixture of these is used as the graphite power. It is preferable to use a carbonaceous powder of which the grain size is adjusted so that the resulting slurry exhibits high fluidity (stable) even if the amount of solvent is reduced, and shows only a small amount of drying shrinkage (cracks) during drying performed when producing the green sheet.

Specifically, a slurry with high dispersion stability can be obtained due to the filling effect (i.e., the space between carbonaceous powder coarse particles is filled with carbonaceous powder fine particles) as the particle size distribution becomes broader. For example, a dense green sheet without cracking is obtained using an appropriate amount of carbonaceous powder of which the grain size has been adjusted so that the average particle diameters determined using the Andreasen distribution equation are 30 to 70 µm, 5 to 10 µm, and 1 to 3 µm. A separator obtained by thermocompression-forming such a green sheet has a high gas impermeability even at a reduced thickness.

Elevations or depressions may be formed on the surface of the green sheet or the homogeneity of the green sheet may decrease due to air contained in the slurry. Therefore, it is preferable to remove air from the slurry by centrifugal de-aeration or vacuum de-aeration. The viscosity of the slurry is adjusted to 100 to 1500 mPa·s. The viscosity of the slurry may be adjusted by adjusting the ratio of the resin binder, the dispersant, and the carbonaceous powder. It is preferable to adjust the viscosity of the slurry by adjusting the amount of the organic solvent.

If the viscosity of the slurry is less than 100 mPa·s, since the concentration of the carbonaceous powder in the slurry decreases, it may be difficult to achieve uniform adhesion of the carbonaceous powder when immersing the organic sheet in the slurry. Moreover, since the ratio of the organic sheet with respect to the molded product increases, the electrical resistivity increases. If the viscosity of the slurry is more than 1500 mPa·s, it may be difficult to cause the slurry to adhere uniformly to a small thickness. Moreover, since the slurry may partially adhere to a large thickness, a variation in the thickness of the green sheet may increase.

### Second step

The second step immerses an organic sheet having a through-hole open area ratio (R) of 25 to 85% in the slurry so that the slurry adheres to each side of the organic sheet, and dries the slurry so that each side of the organic sheet is coated with the slurry to obtain a green sheet.

As the material for the organic sheet, a thermoplastic resin (e.g., olefin resin, vinyl resin, styrene resin, ethylene resin, urethane resin, ester resin, amide resin, polypropylene, or fluororesin), a thermosetting resin (e.g., phenol resin, silicone resin, or epoxy resin), or the like is used.

Examples of the organic sheet that has through-holes include meshed sheets formed of the above-mentioned resin by means of plain weaving, twill weaving, herringbone weaving, diamond weaving, or hexagonal weaving, carded, wet or dry-chemical bonded, thermal bond-spunlaced, or spunbonded sheet, nonwoven fabrics formed by a melt-blow method, a flash spinning method, a tow-spread method, and the like.

In the present invention, an organic sheet having a through-hole open area ratio (R) of 25 to 85% is used. If the through-hole open area ratio (R) is less than 25%, the electrical resistivity in the through-hole direction may increase. If the through-hole open area ratio (R) is more than 85%, the strength may decrease to a large extent. The term "open area ratio (R)" refers to the ratio of the open area per unit area (open area/total area×100%). The open area ratio is determined by photographing the organic sheet at an appropriate magnification, dividing the photograph into a mesh shape to count the number of openings, dividing the total area by the number of mesh openings, and multiplying the resulting value by 100.

It is preferable that the through-holes have a diameter of 0.1 mm so that the through-holes in the organic sheet are sufficiently filled with the slurry. The through-holes may be formed by machining, cutting, laser processing, or the like.

The organic sheet having the through-holes must have flexibility and strength to some extent. For example, it is preferable that the organic sheet have a Taber stiffness determined in accordance with JIS P 8125-1976 "Testing methods of stiffness of paper board by load bending method" of 10 mN-m or less, and have a thickness of 500 µm or less.

The organic sheet is immersed in the slurry so that the slurry adheres to each side of the organic sheet. The amount of the slurry adhering to the organic sheet may be adjusted by adjusting the viscosity of the slurry, the immersion time, or the like.

The organic sheet may be immersed in the slurry in the following manner. Specifically, the organic sheet may be wound around a roll. The organic sheet is unrolled and immersed in a slurry bath, and continuously wound up through a dryer. This makes it possible to efficiently produce a green sheet successively.

### Third step

The third step cuts or punches the green sheet produced in the second step into a specific shape, and thermocompression-forms one or more green sheets.

One or more green sheets cut into a specific shape are placed in a die, and thermocompression-formed at a temperature and a pressure appropriate for the type of resin binder (e.g., at 150 to 250°C and 10 to 100 MPa when the resin binder is a thermosetting resin).

A polymer electrolyte fuel cell separator material 1 (see FIG. 1) that includes a mixture layer 2 in which the mixture of the carbonaceous powder and the resin binder (slurry component) adheres to each side of an organic sheet 4, and a layer 3 in which the through-holes in the organic sheet are filled with the mixture of the carbonaceous powder and the resin binder, is thus produced. Reference numeral 5 indicates the mixture of the carbonaceous powder and the resin binder provided in the through-holes in the organic sheet.

FIG. 1 shows the case where one green sheet is thermocompression-formed. A polymer electrolyte fuel cell separator material may also be produced by thermocompression-forming two or more green sheets depending on the desired thickness of the separator material.

A polymer electrolyte fuel cell separator material that has a reduced thickness, high gas impermeability, and excellent material properties (e.g., strength and conductivity) can thus be produced.

### EXAMPLES

The present invention is further described below by way of examples and comparative examples. Note that the present invention is not limited to the following examples.

### Examples 1 to 4 and Comparative Examples 1 to 4

25 parts by weight of an epoxy resin (base resin: o-cresol novolac resin, curing agent: phenol novolac resin) (resin binder) was dissolved in 80 to 120 parts by weight of methyl ethyl ketone (MEK) (organic solvent). 1 part by weight of an oil-in dispersant (anionic surfactant; polycarboxylate, "Homogenol L-18" manufactured by Kao Corporation) and 1 part by weight of an anti-sagging agent ("Talen" manufactured by Kyoeisha Chemical Co., Ltd.) were added to the mixture to prepare a resin solution.

After the addition of 100 parts by weight of natural graphite flakes (average particle diameter: 55 µm (55%), 10 µm (5%), 3 µm (40%)) to the resin solution, the mixture was sufficiently stirred using a universal stirrer. The air was then removed by a centrifugal method to obtain a slurry having a different viscosity.

As the organic sheet, a nonwoven fabric (thickness: 90 µm) that was obtained by weaving olefin threads by a spun-bond method and differed in through-hole open area ratio (R) was used. The organic sheet was wound around a roll. The organic sheet was then pulled out using a wind-up roll, immersed in a slurry bath, and then caused to pass through a dryer. The slurry was thus continuously caused to adhere to each side of the organic sheet to obtain a green sheet.

The green sheet was cut into dimensions of 300×480 mm, and placed in a die. The green sheet was then thermocompression-formed at a temperature of 180°C and a pressure of 40 MPa to obtain a separator material (300×480 mm, minimum thickness: 0.15 mm) having a structure shown in FIG 1. In Example 4, two green sheets were stacked and thermocompression-formed in the same manner as described above to obtain a separator material (minimum thickness: 0.3 mm).

The properties of the separator material were evaluated by the following methods. The measurement results are shown in Table 1 together with the production conditions.

### (1) Thickness (mm)

The thicknesses of nine points of the separator material were measured using a micrometer gauge. An average value and a variation (maximum value - minimum value) were calculated.

### (2) Flexural strength (MPa)

The flexural strength was measured in accordance with JIS R 1601.

### (3) Strain at break (%)

The flexural strength was measured in accordance with JIS R 1601.

### (4) Electrical resistivity (mΩ·cm)

The electrical resistivity (longitudinal direction) was measured in accordance with JIS C 2525.

The specimen had a width of 4 mm, a length of 35 mm, and a thickness of 0.3 mm.

### (5) Contact resistance (mΩ·cm²)

Two separator materials (30×36 mm) were stacked so that the contact area was 30×30 mm. A direct current of 1 A was caused to flow through the contact surface under a load of 1 MPa. The contact resistance was calculated from a decrease in voltage between the separator materials.

### (6) Gas permeation amount (x 10⁻¹² mol·m·m⁻²·sec⁻¹·MPa)

The amount of nitrogen gas that passed through the material when applying a differential pressure of 0.2 MPa was measured.

The specimen had a diameter of 70 mm and a thickness of 0.3 mm.

**TABLE 1**

| | | | Example | | | | Comparative Example | | | |
|---|---|---|---|---|---|---|---|---|---|---|
| | | | 1 | 2 | 3 | 4 | 1 | 2 | 3 | 4 |
| Slurry | Composition (parts by weight) | Resin binder | 25 | 25 | 25 | 25 | 25 | 25 | 25 | 25 |
| | | Dispersant | 1 | 1 | 1 | 1 | 1 | 1 | 1 | 1 |
| | | Organic solvent | 115 | 95 | 85 | 95 | 120 | 80 | 95 | 95 |
| | | Graphite powder | 100 | 100 | 100 | 100 | 100 | 100 | 100 | 100 |
| | Viscosity (mPa·s) | | 150 | 800 | 1400 | 800 | 50 | 2000 | 800 | 800 |
| Organic sheet (R), (%) | | | 60 | 60 | 60 | 60 | 60 | 60 | 10 | 90 |
| Separator material properties | Number of green sheets | | 1 | 1 | 1 | 2 | 1 | 1 | 1 | 1 |
| | Thickness (mm) | Average value Variation | 0.280 | 0.309 | 0.360 | 0.589 | 0.210 | 0.455 | 0.315 | 0.289 |
| | | | 0.042 | 0.039 | 0.045 | 0.079 | 0.023 | 0.068 | 0.039 | 0.035 |
| | Flexural strength (MPa) | | 56 | 55 | 54 | 56 | 57 | 54 | 55 | 53 |
| | Strain at break (%) | | 1.1 | 1.2 | 1.2 | 1.2 | 1.0 | 1.2 | 1.1 | 1.0 |
| | Electric resistivity (mΩ·cm) | | 10.5 | 9.7 | 10.3 | 9.8 | 13.8 | 16.2 | 12.1 | 18.0 |
| | Contact resistance (mΩ·cm²) | | 10.1 | 9.5 | 9.8 | 10.3 | 13.8 | 14.5 | 19.4 | 14.5 |
| | Gas permeation amount (×10⁻¹²mol·m·m⁻²·sec⁻¹MPa) | | 5.1 | 3.5 | 8.5 | 3.8 | 15.0 | 78.0 | 5.4 | 4.8 |

The separator materials of Examples 1 to 4 had excellent properties. In Comparative Examples 1 and 2 in which the amount of solvent was outside the range of the present invention, the electrical resistivity and the contact resistance increased and the gas impermeability decreased as compared with Examples 1 to 4, although the flexural strength and the strain at break were equivalent to those of Examples 1 to 4. In Comparative Examples 3 and 4 in which the through-hole open area ratio of the organic sheet was outside the range of the present invention, the electrical resistivity and the contact resistance deteriorated as compared with Examples 1 to 4, although the flexural strength, strain at break, and gas impermeability were equivalent to those of Examples 1 to 4.

## Claims

1. A method of producing a polymer electrolyte fuel cell separator material (1), the method comprising
- a first step that disperses 100 parts by weight of carbonaceous powder in a resin solution to prepare a slurry having a viscosity of 100 to 1500 mPa·s,
the resin solution being prepared by dissolving 10 to 35 parts by weight of a resin binder and 0.1 to 10 parts by weight of a dispersant in an organic solvent;
- a second step that immerses an organic sheet (4) having a through-hole open area ratio (R) of 25 to 85% in the slurry so that the slurry adheres to each side of the organic sheet (4), and dries the slurry so that each side is coated with the slurry to obtain a green sheet; and
- a third step that cuts the green sheet into a specific shape, and thermocompression-forms one or more green sheets.

2. A method as claimed in claim 1, **characterized in that** the through-holes in the organic sheet (1) are filled with the mixture of the carbonaceous powder and the resin binder (5), to obtain the polymer electrolyte fuel cell separator material (1) having an average value of thickness of 0.360 mm or less in the case where one green sheet is thermocompression-formed.

## Patentansprüche

1. Verfahren zur Herstellung eines Separatormaterials (1) für eine Polymerelektrolytbrennstoffzelle, umfassend
- einen ersten Verfahrensschritt, in dem 100 Gewichtsteile eines kohlenstoffhaltigen Pulvers in einer Harzlösung dispergiert werden, um einen Schlicker mit einer Viskosität von 100 bis 1500 mPa·s herzustellen, wobei die Harzlösung durch Lösen von 10 bis 35 Gewichtsteilen eines Harzbindemittels und 0,1 bis 10 Gewichtsteilen eines Dispergiermittels in einem organischen Lösungsmittel hergestellt wird,
- einen zweiten Verfahrensschritt, in dem eine organische Folie (4), die einen offenen Flächenanteil (R) durchgehender Löcher von 25 bis 85 % aufweist, in den Schlicker getaucht wird, so dass der Schlicker an jeder Seite der organischen Folie (4) anhaftet, und in welchem der Schlicker getrocknet wird, so dass jede Seite mit dem Schlicker beschichtet ist und eine Grünfolie erhalten wird, und
- einen dritten Verfahrensschritt, in welchem die Grünfolie in eine spezifische Form geschnitten wird und eine oder mehrere Grünfolien einer Thermokompressionsformung unterworfen werden.

2. Verfahren nach Anspruch 1, **dadurch gekennzeichnet, dass** die durchgehenden Löcher in der organischen Folie (1) mit der Mischung aus kohlenstoffhaltigem Pulver und Harzbindemittel (5) gefüllt werden, so dass das Separatormaterial (1) für eine Polymerelektrolytbrennstoffzelle erhalten wird, welches, für den Fall der Thermokompressionsformung einer einzigen Grünfolie, einen durchschnittlichen Dickenwert von 0,360 mm oder weniger aufweist.

## Revendications

1. Procédé de production d'un matériau séparateur de pile à combustible à électrolyte polymère (1), le procédé comprenant
- une première étape qui disperse 100 parties en poids de poudre carbonée dans une solution de résine afin de préparer une suspension ayant une viscosité 200 à 1 500 mPa.s, la solution de résine étant préparée en dissolvant 10 à 35 parties en poids d'un liant de résine et 0,1 à 10 parties en poids d'un dispersant dans un solvant organique ;
- une deuxième étape qui plonge une feuille organique (4) ayant un rapport de surfaces ouvertes de trous traversants de 25 à 85 %, dans la suspension de sorte que la suspension adhère à chaque face de la feuille organique (4), et sèche la suspension de sorte que chaque face est revêtue de la suspension afin d'obtenir une feuille à l'état vert ; et
- une troisième étape qui découpe la feuille à l'état vert en une forme spécifique et forme par thermocompression une ou plusieurs feuilles à l'état vert.

2. Procédé selon la revendication 1, **caractérisée en ce que** les trous traversants dans la feuille organique (1) sont remplies du mélange de la poudre carbonée et du liant de résine (5), afin d'obtenir le matériau séparateur de pile à combustible à électrolyte polymère (1) ayant une valeur moyenne de l'épaisseur de 0,360 mm ou moins dans le cas où une feuille à l'état vert est formée par thermocompression.
